(19)

Europäisches
Patentamt
European
Patent Office
Office européen
des brevets

(11) **EP 3 904 478 A1**

(12) **EUROPEAN PATENT APPLICATION**

(43) Date of publication:
**03.11.2021 Bulletin 2021/44**

(51) Int Cl.:
***C09J 7/00*** *(2018.01)*

(21) Application number: **20172385.5**

(22) Date of filing: **30.04.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Leibniz-Institut für Neue Materialien gemeinnützige GmbH**
**66123 Saarbrücken (DE)**

(72) Inventors:
• **Wang, Yue**
  **66121 Saarbrücken (DE)**
• **Hensel, René**
  **66128 Saarbrücken (DE)**
• **Arzt, Eduard**
  **66123 Saarbrücken (DE)**
• **Federle, Walter**
  **Cambridge CB4 2AH (GB)**
• **Kang, Ki Woong**
  **Cambridge CB3 0DS (GB)**

(74) Representative: **Patentanwälte Gierlich & Pischitzis**
**Partnerschaft mbB**
**Gerbermühlstraße 11**
**60594 Frankfurt am Main (DE)**

(54) **SWITCHABLE ADHESION IN FLUIDS BY MICROSTRUCTURES**

(57) Switchable adhesion can be useful for numerous applications, but is extremely challenging when there are fluids at the contact interface. Deformable cupped microstructures can switch between high (~1 MPa) and low (<0.2 MPa) adhesion strength by adjusting the retraction velocity from 100 to 0.1 $\mu$m/s. The velocity at which the switch occurs is determined by specific design parameters of the cupped microstructure, such as the cup width and angle.

Fig. 1

EP 3 904 478 A1

**Description**

FIELD OF THE INVENTION

Robust adhesion in fluids with the ability to release on demand remains a challenge despite numerous potential applications in a variety of areas such as underwater soft robotics, transportation, biomedicine and tissue engineering. Non-permanent, reversible adhesives often rely on van der Waals interactions, capillary forces or dynamic bonds. But van der Waals interactions are drastically reduced when liquids are present in the contact. The stability of liquid in the contact zone depends mainly the film's tendency to dewet, which is a function of the solid-solid and liquid-solid interfacial energies. For example, water may be expelled from the contact if both surfaces are hydrophobic. On the other hand, if one of the surfaces is at least partially wettable, water remains in the contact. Dynamic bonds are an opportunity to improve adhesion in wet conditions. However, these bonds inevitably require functional groups at the target surface and are subject to wear during repeated attachment-detachment cycles as in pick-and-place handling.

Microstructured elastomer surfaces are capable of reliable and switchable adhesion in dry environments. They are also usable underwater, provided the water can be expelled from the contact region. In particular, hydrophobic microstructures or microstructures with re-entrant geometry have the ability to trap air in between the structures when immersed in water. Such air bubbles can improve adhesion through the presence of capillary forces, even when the contact is fully immersed. The microstructure tips can be further modified by introducing chemical bonds or water absorbers such as hydrogels; however, switchability by external stimuli remains elusive.

In nature, suction cups have evolved for temporary underwater adhesion during locomotion or when catching prey. Most species such as octopus, clingfish and net-winged midge larvae utilize muscular actuation to reduce the hydrostatic pressure in the contact and, therefore, to control the adhesive force. This principle has been translated to synthetic grippers working in dry environments by adding pumps to control the air pressure. On the microscale, this principle fails due to limits in miniaturization of actuated dry suction cups.

It is, therefore, an object of the present invention to provide a structured surface and a method for switchable adhesion in a fluid.

This aim is achieved by the inventions as claimed in the independent claims. Advantageous embodiments are described in the dependent claims.

Even if no multiple back-referenced claims are drawn, all reasonable combinations of the features in the claims shall be disclosed.

The aim is achieved by a structured surface of a solid with switchable adhesion in a fluid, wherein the surface has a structuring comprising at least one projection, which respectively has at least a stalk, and a head section at the end of the stalk pointing away from the surface forming the end face of the projection, wherein the head section comprises a rim extending from the stalk, so that the end face of the projection formed by the head section with the rim has a cupped structure.

In a preferred embodiment the rim forms the sections of the cupped structure, which extend from the projection.

In a preferred embodiment of the invention, the projections of the structured surface of the invention are of pillar-like configuration. This means that the projections in question are preferably configured perpendicular to the surface, said projections having a stalk and an end face, wherein the stalk and the end face can have any chosen cross section (for instance circular, oval, rectangular, square, rhombic, hexagonal, pentagonal, etc.).

Preferably, the projections are configured such that the vertical projection of the end face onto the base surface of the projection forms with the base surface an overlap area, wherein the overlap area and the projection of the overlap area onto the end face spans a body which lies fully within the projection. In a preferred embodiment of the invention, the overlap area comprises at least 50% of the base surface, preferably at least 70% of the base surface, particularly preferably the overlap area comprises the whole of the base surface.

The edges of the rim form the uppermost parts of the projection.

In a preferred embodiment, the plane defined by the highest points of the projection is aligned parallel to the base surface and to the surface.

In a preferred embodiment of the invention, the stalk of the projection, related to its average diameter, has an aspect ratio of height to diameter of 0.5 to 20, preferably of 0.5 to 10, particularly preferably of 0.5 to 5.

By the average diameter is here understood the diameter of the circle which has the same area as the corresponding cross section of the projection, averaged over the entire height of the projection.

In a further embodiment of the invention, the ratio of the height of a projection to the diameter, at a specific height over the entire height of the projection, is always about 0.5 to 20, preferably about 0.5 to 10, particularly preferably about 0.5 to 5. By diameter is understood the diameter of the circle which has the same area as the corresponding cross section of the projection at the defined height.

The head section comprises a rim extending from the stalk, so that the end face of the projection formed by the head section with the rim has a cupped structure.

The head section is preferably defined as the vertical section of the projection, starting from the rim until the uppermost edge of the projection.

The head section is at the end of the stalk and the upper side of the end section including the upper side of the rim forms the end face of the projection.

The end face of the projection formed by the head section with the rim has a cupped structure.

The cupped structure is formed within the projection, the edges formed by the end of the rim are higher than the inner parts of the end face. Preferably the end face has an inner region surrounded by the rim which is lower than the rim. The thickness of the head section is measured as the thickness of the material.

In a preferred embodiment the maximum extension of the rim measured as distance between the stalk and the vertical projection of the rim parallel to the surface is larger than the thickness of the rim, preferably larger than the thickness of the head section.

In a preferred embodiment the rim is formed as an overhang surrounding the stalk. The overhang has a defined thickness and extends a certain projected width. In order to form a cupped structure, the overhang is bent upwards or parallel in relation to a plane parallel to the surface, preferably bent upwards. In a preferred embodiment the angle between this plane and the overhang is less than 45°, preferably less than 20°, more preferably less than 15°, even more preferably less than 12°. The angle is at least 0°, preferably at least 1°. In a preferred embodiment the angle is between 2° and 12°.

The optimal angle depends on the geometry and the material of the projection, especially the extension of the rim.

In a preferred embodiment the end face of the projection above the stalk is parallel to the surface.

In a preferred embodiment the ratio of the maximum extension of the rim and the maximum thickness of the head section is at least 1, preferably at least 2.

In a preferred embodiment the maximum extension of the rim is at least 5 % of the minimum diameter of the end face above the stalk. In a preferred embodiment the maximum extension of the rim is at least 5 % up to 200 %, preferably at least 5 % up to 100 %, more preferably 5 % up to 20 %. In a preferred embodiment the rim has the same maximum extension in each direction.

In a preferred embodiment the maximum extension is less than 500 $\mu$m, more preferred less than 200 $\mu$m, even more preferred less than 100 $\mu$m.

In preferred embodiment the rim is formed as an overhang surrounding the stalk, wherein the rim has the shape of a lip attached to the edge of the stalk.

In a preferred embodiment the lip has a thickness and a width. The width is measured along the rim starting from the stalk. In a preferred embodiment the lip has a uniform thickness over the whole width. In another preferred embodiment the ratio of the width to the thickness is from 1 to 100, preferably from 5 to 20.

In a preferred embodiment, the vertical height of all projections lies within a range from 1 $\mu$m to 2 mm, preferably within a range from 10 $\mu$m to 1 mm.

In a preferred embodiment, the base surface, in terms of area, corresponds to a circle having a diameter between 1 $\mu$m and 1 mm, preferably between 10 $\mu$m and 500 $\mu$m. In one embodiment, the base surface is a circle having a diameter between 1 $\mu$m and 1 mm, preferably between 10 $\mu$m and 500 $\mu$m.

The average diameter of the stalks lies preferably between 1 $\mu$m and 1 mm, preferably between 10 $\mu$m and 500 $\mu$m. Preferably, the height and average diameter is adapted in accordance with the preferred aspect ratio.

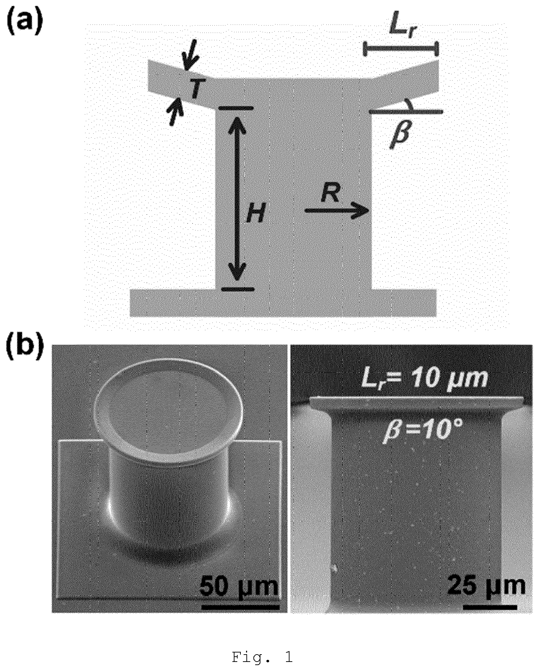

In preferred embodiment of the invention the projection is designed as shown in figure 1 a). Preferably the height H is between 10 and 500 $\mu$m, more preferably 50 and 200 $\mu$m. The radius of the stalk R is between 10 and 200 $\mu$m, preferably between 50 and 100 $\mu$m. Thickness of the rim is between 1 and 50 $\mu$m, preferably between 2 and 20 $\mu$m. The projected width of the rim $L_R$ is between 2 and 800 $\mu$m, preferably between 5 and 100 $\mu$m. The angle $\beta$ is between 0 and 45°, preferably between 5 and 20°, more preferably between 5 and 12 °.

In a preferred embodiment, the structured surface comprises a plurality of projections. The distance between two projections is less than 2 mm, in particular less than 1 mm, measured by the distance of the stalks.

In a preferred embodiment the head section including the rim is made of an elastic or viscoelastic material.

In a further embodiment of the invention, the modulus of elasticity of the projections, preferably of the head section, lies between 10 kPa and 10 GPa, preferably between 500 kPa and 100 MPa, more preferably between 1 MPa and 50 MPa.

The projections may be formed from one material. In another embodiment, the projection has different sections with different modulus of elasticity.

The projections can therefore comprise the following materials:

epoxy and/or silicone-based elastomers, polyurethanes, epoxy resins, acrylate systems, methacrylate systems, polyacrylates as homo- and copolymers, polymethacrylates as homo- and copolymers (PMMA, AMMA, acrylonitrile/methyl methacrylate), polyurethane (meth)acrylates, silicones, silicone resins, rubber, such as R rubber (NR natural rubber, IR polyisoprene rubber, BR butadiene rubber, SBR styrene-butadiene rubber, CR chloroprene rubber, NBR nitrile rubber), M rubber (EPM ethene-propene rubber, EPDM ethylene-propylene-dien rubber), unsaturated polyester resins, formaldehyde resins, vinyl ester resins, polyethylene as homo- or copolymers, and mixture and copolymers of the aforesaid materials. Also preferred are elastomers which are permitted for use in the sector packaging, pharmaceuticals and foods by the EU (according to EU Directive No. 10/2011 of 14.01.2011, published on 15.01.2011) or the FDA or silicone-free UV curable resins from PVD and CVD process technology. In this, polyurethane (meth)acrylates stands for polyurethane methacrylates, polyurethane acrylates, and mixtures and/or copolymers thereof.

Preferred are epoxy and/or silicone-based elastomers, polyurethane (meth)acrylates, polyurethanes, silicones, silicone resins (such as UV curable PDMS), polyurethane (meth)acrylates and rubber (such as EPM and EPDM).

The fluid is preferably surrounding at least the head section and when the structure is contacting the surface.

The fluid can also be a different material like a gas, e.g. air, liquid or other material, as long as it is viscous enough under the conditions of the adhesion. It can be necessary to adapt the structure according to the fluid, e.g. elasticity, rim angle, rim width, rim thickness, in order to achieve the effect of the invention.

A fluid as suitable of the present invention is preferably a liquid, more preferably a liquid at room temperature.

The fluid is preferably chosen to be compatible with the material of the structured surface. The fluid should not decompose or swell the material of the structures surface. Depending on the material, the fluid can be water, oil, silicone oils, organic solvents or mixtures thereof.

In a preferred embodiment the fluid is a liquid with a density between 0.5 g/l and 2 g/l (at 20 °C).

In another preferred embodiment the viscosity of the fluid at 20 °C is between 0.1 mPas and 200000 mPas, preferably 0.1 mPas and 100 mPas. The larger the viscosity of the fluid, the lower the transition velocity.

In a more preferred embodiment the fluid comprises water, preferably as main constituent. In an even more preferred embodiment, the fluid is water.

The end face has a cuplike structure. When the projection is brought into contact with a substrate the uppermost edge of the rim first contacts the substrate. By this a closed, or almost closed space is formed between the rim, end face of the projection and the substrate.

Upon applying a preload the rim elastically deforms. By this the volume of the closed space is reduced and the media within is pressed out. During this the area which is in closest contact between the end face including the rim and the substrate increases.

Preferably the preload is applied, preferably increased, until the most of the, preferably the complete, end face of the projection is in contact with the substrate.

Depending on the material the preload is preferably between 2 and 200 mN.

In this phase, the cupped structure of the end face is completely parallel to the surface of the substrate.

Then the structures surface is pulled back from the substrate, the stalk is stretched and also the head section above the stalk is pulled in the same direction. By this the end face is pulled backwards and media will try to flow into the area below the projection.

If the retraction velocity is high, the pressure difference between the area under the projection and the surrounding media will lead to an increased pressure between the rim and the substrate. This leads to the formation of a seal formed by the rim and the substrate. By this further inflow of media is slowed down. This results in a highly increased adhesion force.

If the retraction velocity is low, no such seal is formed, because the pressure difference is too low. No increase adhesion is observed. The structured surface can be easily detached from the surface of the substrate.

It was surprising that the change between these two regimes occurs at a well-defined retraction velocity, depending on the design of the projection and the material. In a preferred embodiment for a given combination of geometry, fluid and substrate, the change between the two regimes occurs for a small velocity change of less than 5 $\mu$m/s, preferably less than 3 $\mu$m/s, more preferably less than 2 $\mu$m/s, especially less than 1 $\mu$m/s.

By choosing a retraction velocity below or above this transition velocity the adhesion can be controlled. The transition velocity depends on the material and design of the structure, as well as the fluid.

The retraction velocity is preferably between 0.1 $\mu$m/s and 100 $\mu$m/s, more preferably between 0.5 $\mu$m/s and 50 $\mu$m/s. A high retraction velocity is preferably above 5 $\mu$m/s, more preferably above 10 $\mu$m/s.

Using a high retraction velocity an adhesion strength of more than 1 MPa can be achieved.

In a preferred embodiment the change between the two regimes occurs for a small velocity change of less than 20 % of the retraction velocity, preferably less than 10 %, more preferably less than 1 % of the high retraction velocity showing seal formation.

In a preferred embodiment the transition velocity is between 1 $\mu$m/s and 25 $\mu$m/s, preferably between 10 and 20 $\mu$m/s. A high retraction velocity is above the transition velocity, thereby forming a good seal. A low retraction velocity is below the transition velocity, allowing fluid leakage and easy detachment.

The rim, preferably at least the head section, is sufficiently compliant to obtain the effect of the invention, forming the seal only at high retraction velocity.

In another embodiment of the invention the rim comprises at least one opening, which allows fluid to flow under the projection into the contact zone during the retraction. The opening can be a hole, a slit or a channel, preferably on the end face, more preferably on the rim. The channel may be designed so that by contacting the end face with the surface an opening is formed between the structure and the surface. Through such an opening the flow of fluid during the retraction can be increased. This influences the retraction velocity necessary to switch between the two regimes. By addition of a channel, the retracting velocity needed to switch between the two regimes can be easily controlled. This also allows the retraction velocity to be adjusted without changing the cup geometry. This method would also allow to optimize a certain structure for the type of fluid and desired adhesion strength.

In a preferred embodiment the opening allows fluid transfer from the surroundings into the area below the structure. The opening is preferably leading to an increase of the transition velocity compared to a structure without the channel, more preferably it increases the transition velocity by at least 5 % compared to a structure without the opening, preferably at least 10 %.

It is another object of the invention to provide a method for switchable adhesion in a fluid.

In a first step the structured substrate is contacted with a surface in a fluid. The structure and the substrate are surrounded by this fluid.

The surface can be made of any material on which the switchable adhesion is possible. These may be plastic, glass or metal surfaces. Preferred are flat surfaces, which allow the formation of a better seal. Preferred are planar surfaces. The material of the structure can be adjusted to the surface.

Rough surfaces require a softer material of the structure or a thinner rim, in order to form a good seal.

By the cupped shape of the structure, the rim and the contacted surface delimit a space filled with fluid.

Then a preload is applied to bring the end face of the projection into contact with the surface. As a result of the preload, the fluid under the cupped structure is squeezed out into the surroundings. In a preferred embodiment the preload is applied orthogonal to the contacted surface. In another preferred embodiment the preload is applied until the end face of the projection is in complete contact with the surface.

Then the structured substrate is retracted from the surface with a specific retraction velocity. By choosing the retraction velocity appropriately, the adhesion regime of the structured surface can be switched. The retraction direction is preferably orthogonal to the surface. If the retraction velocity is high enough, above the transition velocity, a seal is formed as described previously. Then the structured surface tends to stay adhered to the surface. If the retraction velocity is low, below the transition velocity, no seal is formed and the structured surface can be easily removed from the surface. Preferably the retraction velocity is high enough that the adhesion strength increases at least by a factor of 5 compared to low retraction velocity.

All steps are performed within a fluid, preferably the same fluid.

The structured surfaces according to the invention can be obtained by a variety of fabrication methods. For instance, two-stage photolithography, 2-photon lithography, molding from appropriate templates, etching methods or 3D printing are possible.

Another object of the invention is an attachment device or gripping device comprising the structured surface according to the invention. Preferably the adhesion of this device is only the result of the structured surface according to the invention.

Another object of the invention is the use of a structured surface according to the invention for switchable adhesion, preferably according to the previously described process.

Other objects and advantages of the present invention may be ascertained from a reading of the specification and appended claims in conjunction with the drawings therein.

For a more complete understanding of the present invention, reference is made to the following description in connection with accompanying drawings in which:

Fig. 1    (a) Schematic of a cupped microstructure, where $H$ is the height and $R$ the radius of the stalk, $T$ is the thickness and $L_r$ is the projected width of the rim, and $\beta$ the cup angle; (b) Scanning electron micrographs of the cupped microstructure CM10/10°;

Fig. 2    The underwater pull-off forces and stresses of single CM10/10° microstructures (cf. Fig. 1b) at different retraction velocities;

Fig. 3    (a, b) Contact images for the two adhesion regimes; (a) retraction with low velocity; (b) retraction with high velocity; a dark rim indicates close contact and sealing; interference fringes indicate the beginning of detachment, whereas grey indicates thicker water layers. The high pull-off forces in the adhesive regime are correlated with the appearance of strong seals;

Fig. 4    Dependence of pull-off stress on retraction velocity for different widths of the rim and cup angles; (a) Projected width of the rim of 10 $\mu$m and (b) 20 $\mu$m. The vertical dashed lines highlight the transition velocity, $u_{tr}$. Cup angles were 0°, 5°, 10° and 15°. Each test was repeated three times with the same microstructure;

Fig. 5    (a) Transition velocity as a function of the design parameters; The transition to higher adhesion is shifted to lower velocities for wider rims, $L_r$, and larger cup angles, $\beta$; (b) Schematic defining the dimensions $R$ and $L_r$

for the cup and the pressure, $p_{cav}$, and volume growth rate, $\dot{V}_{cav}$, for the cavity. The insert shows the geometry and laminar flow pattern assumed allowing influx of water, at a rate $\dot{V}_{in}$, into the cavity. The width of the seal is $L_r'$. The thickness of the liquid film in the seal between rim and substrate is denoted as $2h$;

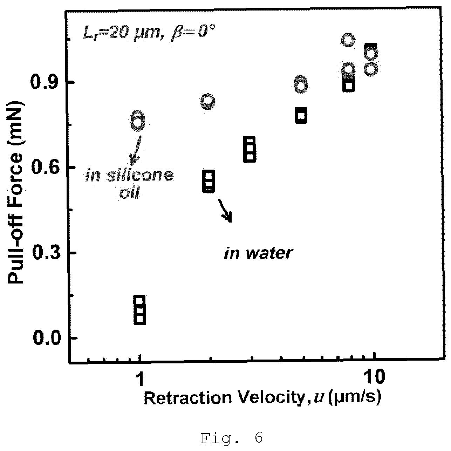

Fig. 6    Pull-off force of cupped microstructure with $L_r$=20 μm and $\beta$=0° in terms of retraction velocity. Tests were performed in water (black squares) with viscosity of $\mu$=1 mPas and silicone oil (red circles) with viscosity of $\mu$=25 mPas.

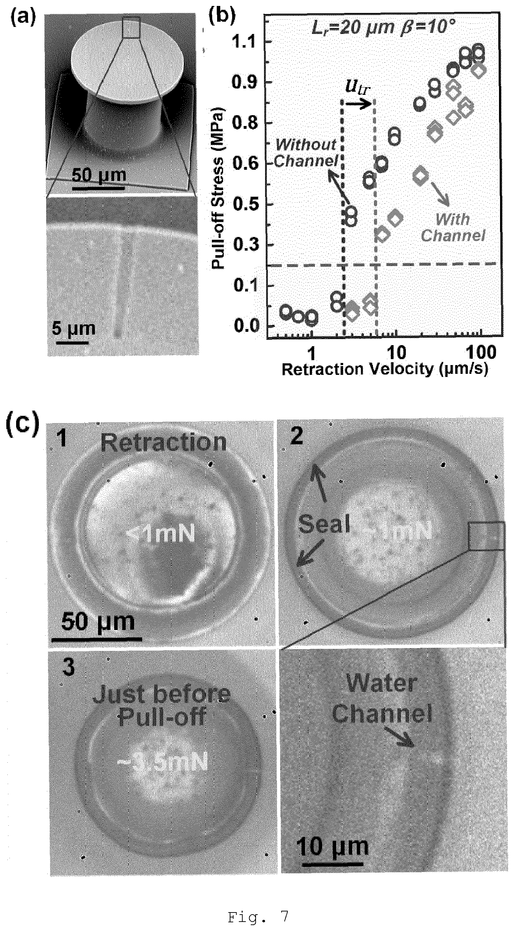

Fig. 7    Cupped microstructure with a defined flow channel; (a) Scanning electron micrograph of the cupped microstructure with a channel along the rim; (b) Comparison of the pull-off adhesion force between the cups with and without a channel; (c) Recorded contact images in the presence of a channel;

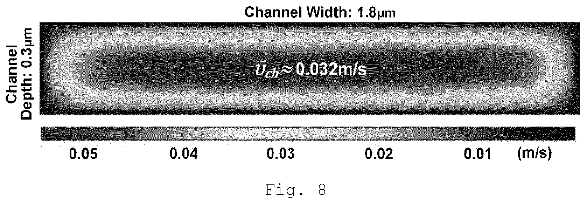

Fig. 8    Cross-section of the channel showing the numerically determined flow profile. The average velocity was $\bar{v}_{ch}$ was 0.032 m/s for a pressure difference of 100 kPa;

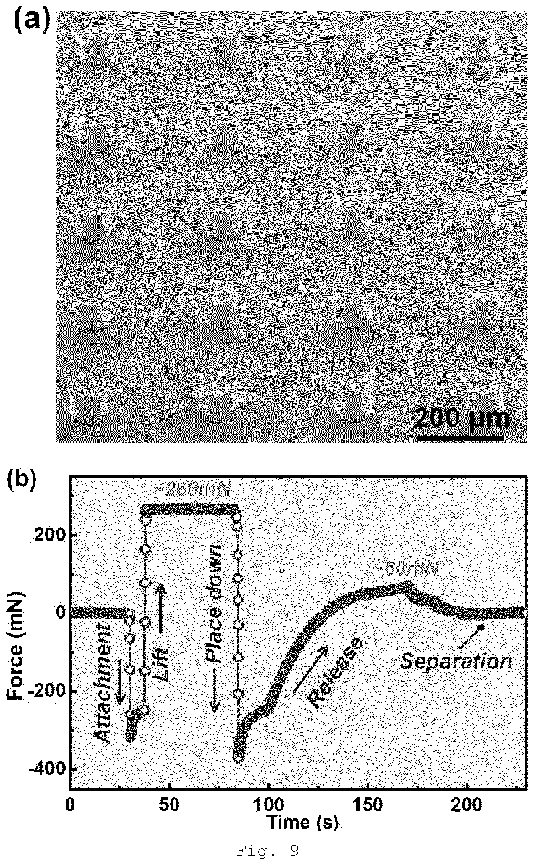

Fig. 9    Demonstration of underwater pick-and-place handling using deformable cupped microstructures; (a) Scanning electron micrograph of the 5x5 mm$^2$ array of cupped microstructures CM10/10°. (b) The force vs. time curve; and

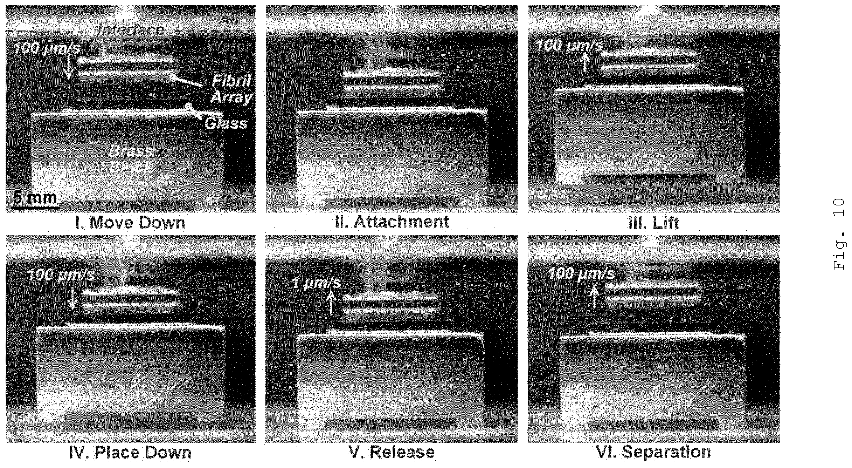

Fig. 10    the corresponding images of one entire cycle where a brass block was picked up and released under water.

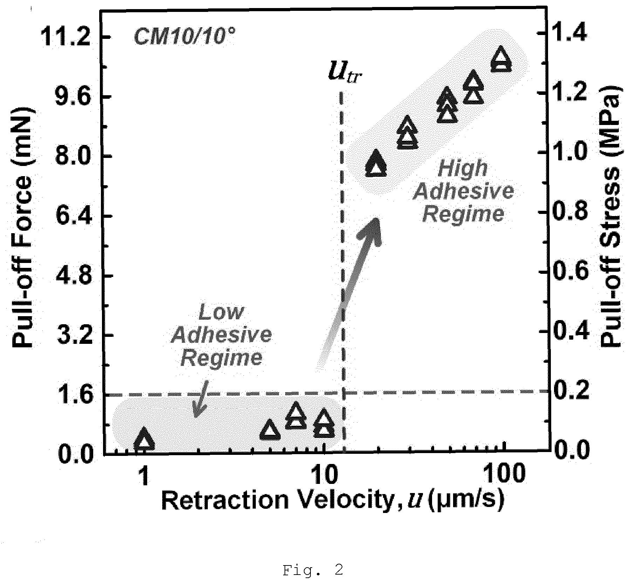

Cupped microstructures were generated by two-photon lithography using standard (meth)acrylate-based resin (Fig. 1a). Subsequently, these structures were used as templates for replication in polyurethane elastomers. The stalk height, **H,** and stalk radius, **R,** of each microstructure were 100 and 40 μm, respectively. The thickness of the rim, **T,** was 5 μm. The projected width of the rim, **$L_r$,** and the cup angle, $\beta$, were varied. The adhesion of a first set of cupped microstructures with **$L_r$ = 10 μm** and $\beta$ **= 10°** (referred to as "CM10/10°", Fig. 1b) to a nominally flat, smooth glass substrate was systematically tested underwater as a function of the retraction velocity varying from 0.1 to 100 μm/s. Pull-off stresses were calculated as the forces divided by the area of the undeformed cup (7854 μm$^2$). Fig. 2 shows that pull-off forces, **$F_p$,** strongly depended on the retraction velocity. Adhesion was weak ($F_p$ < 1.6 mN) for velocities up to 10 μm/s. For higher retraction velocities, the adhesion force drastically increased to values ranging between 7.8 and 10.8 mN. Thus, a velocity-dependent, sharp transition from a *low adhesion* regime to a *high adhesion* regime was obtained with pull-off forces increasing by one order of magnitude. In the adhesive regime, the pull-off force further increased with increasing velocities. The resulting pull-off stresses were in excess of 1 MPa for high velocities. This is far above the maximum adhesion strength expected from pure suction under dry conditions (approx. 0.1 MPa).

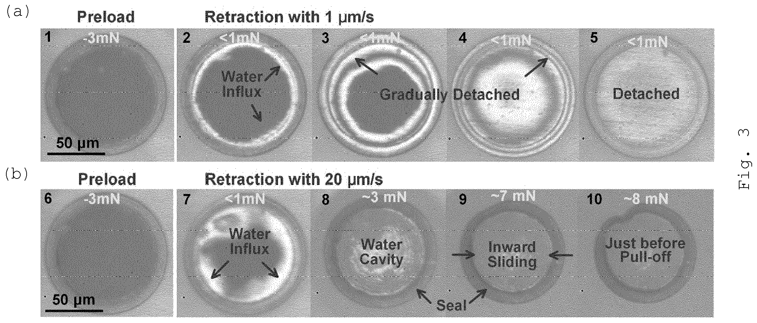

The *in situ* observations in Fig. 3a, b show qualitative differences in the development of adhesive contacts in the two regimes. In both regimes, the contact was formed by compression of the cup during preloading (Steps 1 and 6). During retraction, the behaviour was different in the two adhesion regimes:

i) Low adhesion regime (low retraction velocity): Some initial water influx was visible from the white areas at the perimeter of the stalk (Fig. 3a, Step 2). The resulting detachment of the stalk was seen from the interference fringes visible in Step 3 (Fig. 3a). The detachment led to a cavity under the stalk that was further flooded with water during the pull-off. The expansion of the cavity is restricted by the influx through the outer rim, and by the incompressibility of water (Fig. 3a, Step 4). Finally, the whole structure detached (Fig. 3a, Step 5). In this regime, the pull-off force was below 1.6 mN (or 0.2 MPa), and the bright grey of the rim indicated that it was not in close surface contact (Fig. 3a, Step 3-5).

ii) High adhesion regime (high retraction velocity): The sequence of events (Fig. 3b) differs here by the development of a larger and more stable seal at the perimeter (Steps 6 - 9) before the final detachment of the structure (Step 10). Consequently, the hydrostatic pressure in the cavity was reduced, causing the rim to be pressed more strongly against the substrate (visible by the dark grey of the rim, see Fig. 3b, Step 8-10). As a result, water flow was further reduced, leading to an even lower cavity pressure and tighter seal. This self-sealing mechanism represents a positive feedback loop, which can explain the observed sharp increase of adhesion with pull-off velocity.

In summary, the retraction velocity and the resulting influx of water play a decisive role in the underwater adhesion of cupped microstructures.

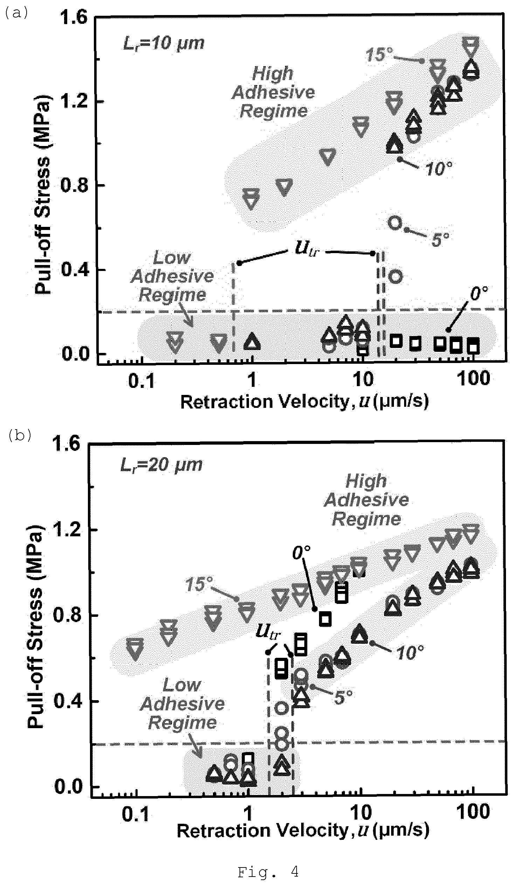

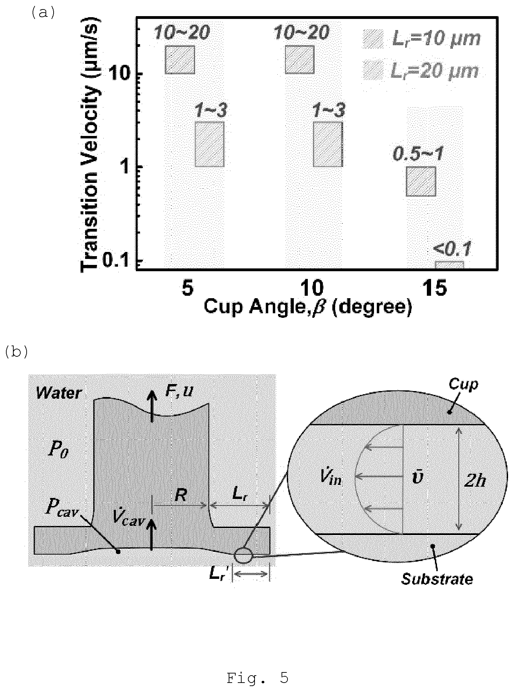

To evaluate the impact of the cup design on the switch velocity, microstructures with projected width of the rim, $L_r$, of 10 and 20 μm and cup angles, $\beta$, of 0, 5, 10, and 15° were fabricated and tested. The results are shown in Figs. 4, 5. With increasing cup angles, the transition from the low-adhesive to the high-adhesive regime occurred at lower retraction velocities. For a cup with $Lr$=10μm, the transition occurred between 0.5 and 1 μm/s for a cup angle of 15°, whereas the transition was observed between 10 and 20 μm/s for cup angles of 5 and 10° (Fig. 4a). A wider rim ($L_r$ = 20 μm) further decreased the switching velocity. Hence, for microstructures with cup angles of 5° and 10°, the transition occurred between 2 and 3 $\mu$m/s, which is almost one order of magnitude lower compared to structures with $L_r$ = 10 $\mu$m (Fig. 4b). Interestingly, the cupped microstructure with $\beta$ = 15° was more adhesive for all retraction velocities tested. Fig. 5a summarizes the switching velocities in terms of $L_r$ and $\beta$. Importantly, the maximum pull-off stresses were consistently high for all structures tested at 100 $\mu$m/s, ranging between 1.0 and 1.4 MPa.

To understand the transition from the low to the high adhesion regime, the detachment process was analysed as a function of the retraction velocity. A water-filled cavity develops under the cup before detachment, and its volume expands over time, $\dot{V}_{cav}$ (Fig. 3a,b). However, this expansion is limited by the influx of water, $\dot{V}_{in}$ due to water incompressibility.

The water influx is approximately equal to the volume expansion of the cavity, i.e.

$$\dot{V}_{in} \approx \dot{V}_{cav} \quad . \qquad\qquad (1)$$

First, the stalk detaches from the substrate and forms the cavity. As this event always happened significantly *before* the pull-off force was reached, it is assumed that the distance between stalk and surface is much larger than the distance between rim and substrate, and that the pressure in the cavity is therefore uniform. The applied force will stretch the stalk (Fig. 5b).

It is assumed that, in the seal, a homogeneous thin water film separates the cup and the substrate due to the hydrophilic glass substrate. (Fig. 5b).

A faster pull will lead to higher adhesion strength. Assuming an unchanged seal ( $L'_r$ , $h$), the pressure difference and thereby adhesion strength should increase linearly with retraction velocity. However, the data shown in Figs. 1, 2, 3, 4 and 5 exhibit that the adhesion is low for small velocities, and then show a sudden, stepwise increase, followed by a logarithmic increase for higher velocities. One can assume that the larger pressure difference caused by a faster pull will press the rim of the cup more firmly into contact, resulting not only in a wider rim in close contact (larger seal $L'_r$ ), but also in a higher normal (compressive) force acting on it, which likely reduces $h$ in the seal. Both factors improve the seal, thereby further increasing viscous flow resistance and hence the pressure difference. Once a threshold pressure difference has been reached, this positive feedback cycle results in a sudden improvement of the seal and strong increase of adhesion. It should be noted that in the adhesive regime, pull-off stresses logarithmically increased with retraction velocity (Fig. 4a,b). This may be explained by the stretching of the microstructures, which leads to relatively smaller effective velocities $u_{eff}/u$ for faster pull-offs.

The critical role of normal, compressive forces on the rim is also suggested by the better performance of microstructures with larger cup angles (15° versus 10° and 5°). Because of higher elastic forces, the thickness $h$ of the fluid film under the rim may be smaller for larger angles; this may explain why larger cup angles led to lower transition velocities and higher adhesion.

Fig. 6 shows that the transition velocity is also influenced by the fluid used. In silicone oil with a higher viscosity the transition velocity is lowered.

To further investigate the transition from low to high adhesion and to modulate the velocity triggering it, a 1.8 $\mu$m-wide and 0.3 $\mu$m-deep channel was radially added to the cupped microstructure design with $L_r$ = 20 $\mu$m and $\beta$ = 10° (CM20/10°, Fig. 7a). The channel allowed well-defined water flow at the interface during retraction. In the presence of the channel, the adhesion switched from low to high adhesion between 5 and 7 $\mu$m/s, which is twice the retraction velocity of the structure without the channel (Fig. 7b). For each retraction velocity, pull-off stresses were lower for the microstructure with the channel compared to the channel-free structures, but similarly increased with higher velocities. Assuming that the transition from low to high adhesion takes place at a pressure difference of 100 kPa (Figs. 4 and 5), the transition velocity of the cupped microstructure with and without channel was calculated. First, the average flow rate through the channel with a cross-section of 0.54 $\mu$m$^2$ was numerically calculated using Comsol Multiphysics 4.2a (Fig. 8). Fig. 8 shows the velocity profile for the cross-section of the channel and an average velocity of $\bar{v}_{ch}$ = 0.032 m/s. This results in a rate of water flow through the channel of $\dot{V}_{ch}$ = 17280 $\mu$m$^3$/s. For the channel in the experiment a transition velocity of between 5 and 7 $\mu$m/s was measured ((see Fig. 7b).

To demonstrate the switchability of cupped microstructures in a pick-and-place process, cupped microstructures (CM10/10°) were fabricated in a square lattice of 25 mm$^2$ with 256 cups at a center-to-center distance of 300 $\mu$m (Fig. 9a). The successful underwater handling of a brass block (~30 g) is demonstrated in Figs. 9 and 10. First, the microarray was brought in contact with the submerged brass block under a compressive preload of 300 mN. Second, the block was lifted using a high retraction velocity of 100 $\mu$m/s and held for 50 s. The tensile load was 260 mN in accordance with the weight of the submerged block. After returning the brass block to the starting position, it was released at a much lower retraction velocity of 1 $\mu$m/s. The adhesion force was 60 mN and, therefore, below the weight of the brass block. Fig.

10 shows the different step of this experiment corresponding to the different sections in Fig. 9b. This experiment successfully demonstrates that the adhesion force can be switched by varying the retraction velocity. The effect therefore exhibits high potential for underwater handling of solid objects.

By the present invention a switchable adhesion via deformable cupped microstructures is demonstrated. The invention opens up new possibilities for micromanipulation of objects especially in wet or submerged conditions. Underwater adhesion was tested for different cup designs and for various retraction velocities. It was found that cupped microstructures can be switched between a high and a low adhesive regime by varying the retraction velocity. The following conclusions can be drawn:

- Cupped microstructures can be switched from a low (<0.2 MPa) to a high (~1 MPa) adhesion regime by adjusting the retraction velocity from 0.5 $\mu$m/s to 20 $\mu$m/s.
- The transition velocity depends on the cup design, such as the projected width of the rim and the cup angle. Thinner rims and smaller cup angles increase the transition velocity.
- The switchability of adhesion can be explained by the self-sealing property of cupped microstructures, whereby faster and stronger pulls lead to an improvement of the seal, further increasing adhesion.

The project leading to this application has received funding from the European Union's Horizon 2020 research and innovation programme under the Marie Sklodowska-Curie grant agreement No 642861.

Materials and methods

Fabrication of deformable cupped microstructures

Cupped microstructures were fabricated using two-photon lithography system (Photonic Professional GT, Nanoscribe, Eggenstein-Leopoldshafen, Germany) as described in Y. Wang, V. Kang, E. Arzt, W. Federle, R. Hensel, ACS Appl. Mater. Interfaces 2019, 11, 26483-26490. For printing in dip-in mode, the resin IP-DIP (Nanoscribe, Eggenstein-Leopoldshafen, Germany) was used. Structures were developed by immersion into propylene glycol monomethyl ether acetate (PGMEA, Sigma-Aldrich, St. Louis, MO, USA) for 10 min and rinsed in isopropanol for 1 min. Before drying with nitrogen, the structures were post-cured by exposing to UV light (200 mW, 365 nm, OmniCure S1500A, Germany) for 5 min to enhance mechanical stability.28 Finally, structures were coated with (1H,1H,2H,2H-perfluorooctyl)-trichlorosilane (AB111444, ABCR, Karlsruhe, Germany) by a vapor deposition method for 45 min. The structures obtained were used as masters for replica molding.

For this purpose, two-component polydimethylsiloxane (PDMS, Sylgard 184, Dow Corning, Midland, USA) was mixed (10:1 base to catalyst ratio), poured onto master structures, and cured in an oven at 75 °C for at least 3 h. After demolding, the PDMS template was post-cured on a hot plate at 200 °C for 30 min. PDMS templates were used (without further surface treatments) for fabrication of polyurethane replicas (PU, NEUKADUR A75, Altropol GmbH, Stockelsdorf, Germany) with a Young's modulus about 15 MPa. The PU prepolymer was mixed 1.2 parts base to 1 part cross-linker. Optionally, to increase the contrast for in situ observation of the adhesion tests, the prepolymer mixture was dyed with 1 wt % blue pigment (Altropol GmbH, Stockelsdorf, Germany). The optionally dyed PU prepolymer was cast onto the PDMS template and cured in an oven at 65 °C for 12 h. Upon demolding, the cupped microstructures were tested without further treatments.

Adhesion measurements

All the tests were performed using a custom-made apparatus. A 2 mm long glass cylinder with a diameter of 2 mm was used as a nominally flat substrate. Two goniometers were used to properly align the microstructures to the substrate. A load cell (KD45-2N, ME-Messsysteme, Henningsdorf, Germany) was utilized to record forces with a resolution of about 0.4 mN. The displacement was realized by a linear actuator (Q-545.240, PI, Karlsruhe, Germany). Data were recorded using a LabVIEW script. In addition, contact area images of the microstructures with the substrate were observed through the transparent glass cylinder using a tubular optic and monochromatic coaxial illumination (UltraZoom, Navitar Inc., New York, NY, USA) with a wavelength of 436 nm. Videos were recorded with a camera (DMK 33UX252, ImagingSource, Bremen, Germany). Cupped microstructures were immersed in a 50 $\mu$l droplet of distilled water for all underwater adhesion tests. The glass substrate was brought in contact with the microstructures with a compressive preload of 3 mN and held for 5 s. Then, the substrate was normally retracted until the structure detached. The maximum tensile load was defined as the pull-off force. Peak normal forces were converted into stresses by dividing them with the projected area of the cup in the original undeformed state. The retraction velocities varied from 0.1 to 100 $\mu$m/s. Each test was repeated with at least three different samples. Between the tests the glass substrate was kept immersed in the water droplet.

Pick-and-release demonstration

An adhesive array of 5x5 mm$^2$ with 256 cupped microstructures (CM10/10°) was prepared as described above. A 1 mm-thick glass substrate was glued to the top surface of a brass block with edge lengths of 20, 20, and 10 mm, and a weight of about 30 g (in air). The brass block was placed at the bottom of a water basin, whereas the adhesive pad was fixed to the load cell (KD40S-5N, ME-Messsysteme, Germany) and a linear stage (M-404.8PD, PI, Karlsruhe, Germany). Then the adhesive array was brought in contact with a preload of about 300 mN, a rate of 100 μm/s and held for 8 s. The retraction velocity was either 100 μm/s (pick and lift) or 1 μm/s (release). Upon lifting, the brass block was held (underwater) for 50 s. A side view of the process was recorded using a digital camera (Nikon D7200, Nikon Corporation, Japan).

While the present inventions have been described and illustrated in conjunction with a number of specific embodiments, those skilled in the art will appreciate that variations and modifications may be made without departing from the principles of the inventions as herein illustrated, as described and claimed. The present inventions may be embodied in other specific forms without departing from their spirit or essential characteristics. The described embodiments are considered in all respects to be illustrative and not restrictive. The scope of the inventions are, therefore, indicated by the appended claims, rather than by the foregoing description. All changes which come within the meaning and range of equivalence of the claims are to be embraced within their scope.

**Claims**

1.   A structured surface of a solid with switchable adhesion in a fluid, wherein the surface has a structuring comprising at least one projection, which respectively has at least a stalk, and a head section at the end of the stalk pointing away from the surface forming the end face of the projection, wherein the head section comprises a rim extending from the stalk, so that the end face of the projection formed by the head section with the rim has a cupped structure.

2.   The structured surface according to claim 1, **characterized in that** the rim is formed as an overhang surrounding the stalk.

3.   The structured surface according to claim 2, **characterized in that** the angle between a plane parallel of the surface and the overhang is less than 45 °.

4.   The structured surface according to one of the claims 1 to 3, **characterized in that,** the head section is made of an elastic or viscoelastic material.

5.   The structured surface according to one of the claims 1 to 4, **characterized in that,** the structures surface comprises a plurality of projections.

6.   Method for switchable adhesion in a fluid comprising the following steps:

   a) contacting the structured substrate according to one of the claims 1 to 5 with a surface in a fluid;
   b) Applying a preload to contact the end face of the projection with the surface;
   c) retracting the structured substrate from the surface with a specific retraction velocity.

7.   Method according to claim 6, wherein the retraction velocity is above or below a transition velocity.

8.   Attachment device comprising a structured surface according to any of claims 1 to 5.

9.   Use of the structured surface according to any of claims 1 to 5 for switchable adhesion.

EP 3 904 478 A1

(a)

(b)

Fig. 1

Fig. 2

Fig. 3

(a)

(b)

Fig. 4

(a)

(b)

Fig. 5

Fig. 6

Fig. 7

Fig. 8

Fig. 9

Fig. 10

Europäisches Patentamt

European Patent Office

Office européen des brevets

## EUROPEAN SEARCH REPORT

Application Number

EP 20 17 2385

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YUE WANG ET AL: "Strong Wet and Dry Adhesion by Cupped Microstructures", ACS APPLIED MATERIALS & INTERFACES, vol. 11, no. 29, 26 June 2019 (2019-06-26), pages 26483-26490, XP055708256, US ISSN: 1944-8244, DOI: 10.1021/acsami.9b07969 * the whole document * | 1-9 | INV. C09J7/00 |
| A | BAIK SANGYUL ET AL: "Highly Adaptable and Biocompatible Octopus-Like Adhesive Patches with Meniscus-Controlled Unfoldable 3D Microtips for Underwater Surface and Hairy Skin", ADVANCED SCIENCE, , vol. 5, no. 8 1 August 2018 (2018-08-01), page 1800100, XP009523101, ISSN: 2198-3844, DOI: 10.1002/ADVS.201800100 Retrieved from the Internet: URL:https://www.ncbi.nlm.nih.gov/pmc/articles/doi/10.1002/advs.201800100 | 1-9 | TECHNICAL FIELDS SEARCHED (IPC) C09J C08J |

The present search report has been drawn up for all claims

| Place of search | Date of completion of the search | Examiner |
|---|---|---|
| Munich | 24 September 2020 | Pirog, Pawel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 102011 A

**Non-patent literature cited in the description**

- **Y. WANG ; V. KANG ; E. ARZT ; W. FEDERLE ; R. HENSEL.** *ACS Appl. Mater. Interfaces,* 2019, vol. 11, 26483-26490